# EUROPÄISCHE PATENTSCHRIFT

(11) **EP 4 533 632 B1**
(45) Veröffentlichungstag und Bekanntmachung des Hinweises auf die Patenterteilung: **14.10.2026**
(21) Anmeldenummer: 23732399.3
(22) Anmeldetag: 02.06.2023
(51) Int. Cl.: H02J 7/00, H02J 7/36

(54) **BATTERIE MIT ELEKTRONIKMODULEN**
BATTERY HAVING ELECTRONIC MODULES
BATTERIE COMPRENANT DES MODULES ÉLECTRONIQUES

(30) Priorität: 02.06.2022 DE 102022001930
(43) Veröffentlichungstag der Anmeldung: 09.04.2025
(73) Patentinhaber: p&e power&energy GmbH, 34127 Kassel (DE)
(72) Erfinder: MUYLLAERT, Koenraad, 34131 Kassel (DE); ROTHENBURGER, Max, 34233 Fuldatal (DE); SCHULZE, Gerold, 34121 Kassel (DE); SCHÜTTE, Tobias, 35039 Marburg (DE)
(74) Vertreter: REHBERG HÜPPE + PARTNER
(86) Internationale Anmeldenummer: PCT/EP2023/064856
(87) Internationale Veröffentlichungsnummer: WO 2023/233012

(56) Entgegenhaltungen:
- EP-B1- 3 146 576
- WO-A1-2021/072497
- DE-A1- 102019 130 736
- DE-A1- 102019 130 739

## Beschreibung

Die Erfindung ist im Bereich von Speichersystemen für elektrische Energie angesiedelt, speziell geht es um Batteriesysteme, bei denen eine Vielzahl von Batterien in Reihe geschaltet werden.

Für ein nachhaltiges Energiesystem mit hohem Anteil von fluktuierenden Energiequellen, wie Wind- oder Solarenergie, braucht es leistungsfähige, zuverlässige und kostengünstige Energiespeicher, um diese Fluktuationen auszugleichen. Die Leistungselektronik zusammen mit der passenden Aufbau- und Verbindungstechnik bildet die entscheidenden Komponenten, um die Effizienz von Batteriesystemen zu verbessern.

Um zu höheren Systemspannungen - im Vergleich zu einer einzelnen Batteriezelle - zu kommen, werden in bekannten Topologien von Batteriesystemen Batteriezellen elektrisch direkt ("hart") in Reihe geschaltet und dieser Reihenschaltung ein Wechselrichter parallelgeschaltet. Diese existierenden Topologien von Batteriesystemen sind aber in verschiedenen Hinsichten nachteilig. Zum einen liegt das an den Kosten des Batteriemanagementsystems, welche wenigstens linear mit der Anzahl der in Reihe geschalteten Zellen steigen. Da jede Zellebene im Hinblick auf die Spannungslage einzeln überwacht werden muss, werden mehrere potentialtrennende Messungen oder Messwertübertragungen benötigt, die mit Risiken und Kosten verbunden sind. Zum anderen bestimmt die schwächste Batteriezelle (höchster Innenwiderstand, geringste Kapazität) in der Reihenschaltung zu einem großen Teil die Leistungsfähigkeit und damit auch die Lebensdauer des Batteriespeichers. Batteriezellen weisen jedoch bereits bei der Fertigung Toleranzen im Hinblick auf Kapazität, Innenwiderstand und Alterungsverhalten auf. Im Laufe der Betriebsdauer oder bei leicht unterschiedlichen Belastungen (z. B. wegen ungleichmäßiger Temperaturverteilung) und im Rahmen verschiedener Alterungsmechanismen werden diese Unterschiede typischerweise größer. Um diese Unterschiede auszugleichen sind zwar verschiedene Verfahren ("Balancing") etabliert, die den Ansatz verfolgen kleine Energiemengen auszutauschen (aktive Verfahren) oder einfach in Wärme umzuwandeln (passive Verfahren), jedoch weisen diese jeweils spezifische Nachteile, wie Balancingverluste, Kostensteigerung oder Komplexitätserhöhung auf.

Zusätzlich steigen Sicherheitsrisiken durch die Erhöhung der Batterieausgangsspannung mittels reiner Reihenschaltung von Batteriezellen, weil Batterien (im Unterschied beispielsweise zu Photovoltaikmodulen) einen sehr hohen Kurzschlussstrom liefern können, welcher zu höheren Gefährdungs- und Schadenspotentialen führt. Dies erschwert das Handling entlang der gesamten Kette von der Fertigung bis zum Betrieb beim Kunden und verursacht höhere Aufwendungen (z. B. redundante Messpfade für Spannung und Strom, redundante Schaltorgane) zur Reduzierung dieser Sicherheitsrisiken.

Im Stand der Technik bekannt sind Modular Multi Level Converter (MMC) hauptsächlich durch Anwendungen in der Hochspannungstechnik und unter Verwendung von Hochspannungskondensatoren, eine solche Stromrichterschaltung wird beispielsweise in der DE 101 03 031 B4 beschreiben. Hier wird eine Stromrichterschaltung mit elektrisch in Reihe geschalteten Ersatz-Dreipolen offenbart, wobei die Ersatz-Dreipole aus einem Kondensator mit parallel geschalteter Halbbrücke bestehen können.

Ein vorgeschlagener Lösungsansatz in Bezug auf Batteriemodule sieht vor, jede Zellebene oder jede Batteriezelle mit vier Leistungshalbleitern auszurüsten, wie beispielsweise in der DE 10 2018 003 642 B4 beschrieben. Die vier Leistungshalbleiterschalter gestatten es, den Strom in positiver oder negativer Richtung durch die Zelle zu führen. Im Zusammenhang mit der außen anliegenden Spannung resultiert für die Zelle eine Leistungsaufnahme oder -abgabe. Weiterhin kann der Strom durch das Schließen zweier nebeneinander liegender Schalter an der Zelle vorbeigeführt werden oder durch Sperren aller Halbleiter der Stromfluss auf jeder Zellebene unterbrochen werden. Dies erlaubt aktive Ladungsausgleichverfahren und auch das Herausnehmen von Batterien mit extrem schlechter Performance aus dem Leistungsfluss.

Durch die Fusion von Funktionen - Leistungssteuerung und Batteriemanagement System (BMS) - auf der Ebene von einzelnen Batteriezellen entstehen Batteriespeichersysteme mit höherer Batteriespannung, die gleichzeitig folgende Vorteile bringen:
- bessere Umwandlungswirkungsgrade der Leistungselektronik
- sichereres Systemdesign durch höchstens Kleinspannungen an den Anschlussklemmen im ausgeschalteten Zustand.

Im Stand der Technik ist es üblich, die elektronischen Bauteile auf einer Leiterplatte meist in einer rechtwinkligen, rasterartigen Weise - bezogen auf die Ränder der Leiterplatte - anzuordnen, wie beispielsweise in der WO 2021/164816 A1 gezeigt. Dies ist in Hinblick auf die entstehende Leiterbahngeometrie nicht immer optimal.

Aus der DE 10 2019 130 736 A1 ist eine Batterie mit mehreren benachbart zueinander angeordneten Batteriemodulen und mehreren Halbleiterschaltelementen bekannt. Jedes Batteriemodul umfasst wenigstens eine Batteriezelle und weist vier Modulanschlüsse auf. Die Batterie weist zumindest für einen Teil der Batteriemodule eine Schaltungsstruktur auf, bei der ein erster Modulanschluss eines ersten der Batteriemodule über ein erstes der Halbleiterschaltelemente mit einem vierten Modulanschluss eines zweiten der Batteriemodule, ein zweiter Modulanschluss des ersten der Batteriemodule über ein zweites der Halbleiterschaltelemente mit einem dritten Modulanschluss eines dritten der Batteriemodule, ein dritter Modulanschluss des ersten der Batteriemodule über ein drittes der Halbleiterschaltelemente mit einem zweiten Modulanschluss eines vierten der Batteriemodule und ein vierter Modulanschluss des ersten der Batteriemodule über ein viertes der Halbleiterschaltelemente mit einem ersten Modulanschluss eines fünften der Batteriemodule abhängig von Schaltzuständen dieser Halbleiterschaltelemente elektrisch koppelbar ist. Mittels der Halbleiterschaltelemente besteht die Möglichkeit, die Batteriemodule beliebig miteinander zu verbinden, galvanisch voneinander abzutrennen, einzelne Batteriemodule zu überbrücken oder auch zur Generierung einzelner DC-Spannungen einzusetzen. Mittels einer Steuereinheit wird die Batterie, und zwar ihre Halbleiterschaltelemente, derart betrieben, dass drei Phasen einer Wechselspannung durch Betrieb der Batterie nach Art eines Mehrpegelenergiewandlers bereitgestellt werden.

Aus der DE 10 2019 130 739 A1 ist eine Batteriezelle mit einer galvanischen Zelle bekannt, die einen ersten und einen zweiten Elektrodenanschluss aufweist. Der erste Elektrodenanschluss ist an einen ersten Zellenanschluss und der zweite Elektrodenanschluss ist an einen zweiten Zellenanschluss angeschlossen. Die Batteriezelle weist weiterhin einen dritten und einen vierten Zellenanschluss sowie wenigstens vier Halbleiterschaltelemente auf, mittels derer die Elektrodenanschlüsse abhängig von einem jeweiligen Schaltzustand der Halbleiterschaltelemente jeweils mit dem dritten oder dem vierten der Zellenanschlüsse elektrisch koppelbar sind. Die Halbleiterschaltelemente dienen vor allem dazu, einzelne Batteriezellen aus dem System heraus-, hinzu- oder Zellen parallelzuschalten, unabhängig von dem Aktivierungs- oder Deaktivierungszustand von Vor- sowie Nachfolgerzellen.

Aus der EP 3 146 576 B1 ist ein Batteriemodul mit einer Batteriebaugruppe mit mindestens einer ersten Batteriespalte und einer zweiten Batteriespalte bekannt, die jeweils eine Mehrzahl von Batteriezellen aufweisen. Die erste Batteriespalte und die zweite Batteriespalte sind in eine rechteckige Form angeordnet, während sie in der Spaltenrichtung durch eine Länge im Wesentlichen gleich einem Radius eines Umfangs einer externen Form, die den Batteriezellen zugeordnet ist, versetzt sind. Dabei sind Mittelpunkte von Endflächen von zwei benachbarten Batteriezellen in der ersten Batteriespalte und einer Endfläche einer Batteriezelle in der zweiten Batteriespalte zwischen den beiden Batteriezellen in der ersten Batteriespalte in den Ecken eines gleichseitigen Dreiecks angeordnet. Entsprechend weist ein Verbindungsanschlussabschnitt, der mit Anschlussebenen der Batteriezellen gekoppelt ist, einen ersten Kopplungsabschnitt, der dazu konfiguriert ist, mit der ersten Batteriespalte zu koppeln, und einen dazu versetzten zweiten Kopplungsabschnitt auf, der dazu konfiguriert ist, mit der zweiten Batteriespalte zu koppeln.

Aus WO 2021/072497 A1 ist eine auf einer Leiterplatte ausgebildete elektrische Schaltung bekannt, die sich über Zellenanschlüsse mehrerer Energiespeichereinheiten hinweg erstreckt. Die Leiterplatte weist mindestens eine Anschlussregion auf, die als primärer Pfad für elektrischen Strom zwischen der Elektronik und den Zellenanschlüssen ausgebildet ist. Einzelne Zellenanschlüsse weisen eine zentrale Öffnung in der Leiterplatte und davon X-förmig weg verlaufende Schlitze zur Erhöhung der Verformbarkeit der Leiterplatte auf.

Aus wirtschaftlicher als auch aus technischer Sicht besteht weiterhin Bedarf an kostengünstiger, aber auch mit geringen ohmschen Verlusten behafteter Aufbau- und Verbindungstechnik für effiziente und kostengünstige Batteriemodule.

Es ist daher Aufgabe der Erfindung, Lösungen für eine mit geringen ohmschen Verlusten behaftete Aufbau- und Verbindungstechnik eines Batteriemoduls anzugeben, die gleichzeitig kostengünstig und einfach zu handhaben ist.

Diese Aufgabe wird gelöst durch ein Elektronikmodul nach Anspruch 1 und auf ein Batteriemodul nach Anspruch 11. Bevorzugte Ausführungsformen des erfindungsgemäßen Elektronikmoduls und des erfindungsgemäßen Batteriemoduls sind in den abhängigen Patentansprüchen angegeben.

Überraschenderweise hat sich gezeigt, dass je nach Größenverhältnis zwischen Batteriezelle und Anzahl der Leistungshalbleiterbausteine durch eine eher diagonale geometrische Anordnung der Leistungshalbleiterbausteine auf der Leiterplatte des Elektronikmoduls größere Leitungsquerschnitte und damit insgesamt eine verbesserte Leitfähigkeit des Batteriemoduls erzielt werden können.

Ein erfindungsgemäßes Batteriemodul weist eine Vielzahl von in Serie geschalteten AC-Batterien auf. Jede der Vielzahl von in Serie geschalteten AC-Batterien weist eine DC-Batterie und ein zugehöriges Elektronikmodul auf. Unter dem Begriff DC-Batterie soll hier mindestens eine Batteriezelle, auch Sekundärzelle (galvanisches Element) genannt, verstanden werden, es sind aber auch Reihenschaltungen, Parallelschaltungen und/oder Kombinationen von Batteriezellen denkbar. Bevorzugt ist es jedoch, jede Batteriezelle mit einem Elektronikmodul auszustatten. Diese Batteriezellen können mit Gleichstrom geladen werden bzw. aus ihnen kann im geladenen Zustand Gleichstrom entnommen werden. Die DC-Batterie weist einen ersten DC-Batterie-Anschluss und einen zweiten DC-Batterie-Anschluss auf, was üblicherweise als Plus- bzw. Minuspol einer Batteriezelle bezeichnet wird. Das jeweils zugehörige Elektronikmodul weist eine Leiterplatte mit einer H-Brücke aus vier Leistungshalbleiterbausteinen auf. Die Leiterplatte, oft auch printed circuit board (PCB) genannt, kann aus mehreren leitfähigen Schichten bestehen, die Leistungshalbleiterbausteine können auf beiden Außenseiten der Leiterplatte verteilt angeordnet sein. Das zugehörige Elektronikmodul kann weitere Bauteile aufweisen, beispielsweise zur Kommunikation und Ansteuerung der Leistungshalbleiterbausteine.

H-Brücken sind im Stand der Technik bekannt, sie bestehen meist aus zwei parallel geschalteten Reihenschaltungen aus jeweils mindestens zwei Schaltern. Je nach Stromtragfähigkeit und/oder Größe der Schalter, dem Platzangebot auf der Leiterplatte etc. können die jeweiligen Schalter auch als Parallelschaltung mehrerer Schalter ausgeführt werden. Unter Leistungshalbleiterbaustein sollen hier einzelne Halbleiterschalter, beispielsweise MOS-FETs mit einem eigenen Gehäuse, Bausteine, die mehrere parallel wirkende Schalter in einem Gehäuse enthalten, oder Parallelschaltungen aus Halbleiterschaltern in jeweils eigenem Gehäuse verstanden werden, die aber wie ein Schalter der H-Brücke angesteuert werden und wie ein Schalter der H-Brücke wirken.

Die H-Brücke weist einen ersten H-Brücken-Anschluss und einen zweiten H-Brücken-Anschluss auf. Zwischen den beiden H-Brücken-Anschlüssen sind zwei Reihenschaltungen aus je zwei Leistungshalbleiterbausteinen parallel geschaltet angeordnet. Zwischen den beiden Leistungshalbleiterbausteinen der zwei Reihenschaltungen sind der H-Brücken-Eingang und der H-Brücken-Ausgang angeordnet.

Der erste DC-Batterie-Anschluss ist mittels einer Feder über Anschlussbereiche der Leiterplatte mit dem ersten H-Brücken-Anschluss elektrisch leitend verbindbar oder verbunden und der zweiten DC-Batterie-Anschluss ist mit dem zweiten H-Brücken-Anschluss mittels einer weiteren Feder über Anschlussbereiche der Leiterplatte elektrisch leitend verbindbar oder verbunden. Unter dem Begriff "Feder" sollen hier elastisch wirkende leitende Kontaktelemente verstanden werden: Spiralfedern, Blattfederkontakte, Drehfederkontakte oder auch federnde Kontaktbänder ("Kontaktlamellen"). Die Federn können dazu dienen, die Positionierung des elektrischen Kontaktes zwischen DC-Batterie-Anschluss (auch Batteriepol genannt) und der Anschlussbereiche der Leiterplatte variabler zu gestalten, beziehungsweise laterale und/oder Höhendifferenzen und/oder Scherkräfte auszugleichen.

Durch eine Verbindung des H-Brücken-Ausgangs einer AC-Batterie mit dem H-Brücken-Eingang einer nächsten AC-Batterie können die AC-Batterien in Serie geschaltet werden. Die vier Leistungshalbleiterbausteine sind in einer X-förmigen Konfiguration auf der Leiterplatte angeordnet, so dass Übergangswiderstände des Batteriemoduls minimiert werden. Die vier Leistungshalbleiterbausteine werden in einem Winkelbereich zwischen 20° und 70°, bevorzugt von etwa 45°, zu den Kanten der Leiterplatte ausgerichtet und nicht wie im Stand der Technik üblich parallel zu den Außenkanten der Leiterplatte. Durch die geometrische Anordnung der vier Leistungshalbleiterbausteine in der Form eines X auf der Leiterplatte vergrößert sich die Fläche und damit auch der zur Stromleitung zur Verfügung stehende Leitungsquerschnitt, wodurch sich in der Folge die Verluste durch ohmsche Widerstände vorteilhaft reduzieren.

In einer Ausführungsform des erfindungsgemäßen Batteriemoduls ist die Feder, die zwischen erstem DC-Batterie-Anschluss und zweitem DC-Batterie-Anschluss jeweils und Anschlussbereichen angeordnet ist, als Toroidfeder ausgestaltet. Diese kann zwischen erstem DC-Batterie-Anschluss und zweitem DC-Batterie-Anschluss jeweils und Anschlussbereichen der Leiterplatte klemmend befestigt werden. Unter Toroidfeder soll hier eine ringförmig geschlossene Spiralfeder aus elektrisch gut leitfähigem Material verstanden werden. Die Verwendung einer Toroidfeder bietet, beispielsweise gegenüber einer Tellerfeder, Vorteile hinsichtlich einer Vielzahl von definierten Kontaktpunkten. Durch diese Vielzahl von Kontaktpunkten stellen sich beispielsweise geringere Anforderungen an die Ebenheit der Kontaktflächen. Die Federmitte der Toroidfeder bietet eine Zentrierungs- und/oder Fixierungsmöglichkeit, beispielsweise durch einen Bolzen. Die Strombelastbarkeit der Toroidfeder ist durch die Anzahl der Windungen skalierbar.

In einer weiteren Ausführungsform des erfindungsgemäßen Batteriemoduls ist die Feder, die zwischen erstem DC-Batterie-Anschluss und zweitem DC-Batterie-Anschluss und den jeweiligen Anschlussbereichen angeordnet ist, als längliche Spiralfeder ausgestaltet. Eine längliche Spiralfeder bietet ähnliche Vorteile hinsichtlich einer Vielzahl von definierten Kontaktpunkten wie oben in Bezug auf die Toroidfeder beschrieben.

In einer weiteren Ausführungsform des erfindungsgemäßen Batteriemoduls sind zwischen den Leistungshalbleiterbausteinen auf der Leiterplatte im Wesentlichen dreieckige Kontaktierungsflächen angeordnet. Die X-förmige Anordnung der Leistungshalbleiterbausteine eröffnet die weitere vorteilhafte Möglichkeit größere Kontaktierungsflächen zwischen den Schenkeln des "X" anzuordnen. Dadurch können die Kontaktierungsflächen vergrößert ausbildet werden, so dass die Übergangswiderstände zwischen erstem und zweitem DC-Batterie-Anschluss und den Leistungshalbleiterbausteinen sowie zwischen dem H-Brücken-Eingang und dem H-Brücken-Ausgang und den Leistungshalbleiterbausteinen minimiert werden. Die im Wesentlichen dreieckige Form ergibt sich also aus der Anordnung der Kontaktierungsflächen zwischen den Schenkeln des "X" und einer maximal großen Ausfüllung eines Raumes zwischen diesen Schenkeln. Sind die Kontaktierungsflächen einstückig mit den Anschlussbereichen der Batteriepole ausgebildet, kann sich insgesamt eine Form ergeben, die einer einfachen Darstellung eines Hauses ähnelt.

In einer weiteren Ausführungsform des erfindungsgemäßen Batteriemoduls sind Abmaße der Leiterplatte mit dem zugehörigen Elektronikmodul abgestimmt auf Abmaße der Oberseite der zugehörigen DC-Batterie. Batteriemodule sollen in der Regel möglichst kompakt ausgeführt sein, das heißt, dass die DC-Batterien dicht an dicht in einem Batteriepack angeordnet werden. Manchmal werden diese Batteriepacks so gebaut, dass die DC-Batterien mit einer Presskraft beaufschlagt werden. Soll die Leiterplatte mit dem zur DC-Batterie zugehörigen Elektronikmodul direkt auf die Oberseite der DC-Batterie aufgebracht werden, so ergeben sich bei einer sehr dicht gepackten Anordnung der DC-Batterien maximale Abmaße der Leiterplatte die ungefähr mit den Abmaßen der Oberseite der DC-Batterie korrespondieren.

In einer weiteren Ausführungsform des erfindungsgemäßen Batteriemoduls sind die vier Leistungshalbleiterbausteine jeweils als Parallelschaltung mehrerer Leistungshalbleiter mit separaten Gehäusen ausgebildet. Die mehreren Leistungshalbleiter wirken wie ein Leistungshalbleiterbaustein, sie werden gleichzeitig angesteuert und schalten gleichzeitig. Je nach Stromtragfähigkeit verfügbarer Leistungshalbleiter, Platzangebot auf der Leiterplatte und anderer Designkriterien einer Leiterplatte kann es beispielsweise kostengünstiger sein, statt eines Halbleiterschalters mehrere parallel zu schalten, hierdurch ergeben sich vorteilhaft längere Schenkel der erfindungsgemäßen X-Konfiguration. Wodurch sich wiederum die Möglichkeit ergibt, noch größere dreieckige Kontaktierungsflächen zwischen den mehreren - wie ein Schalter wirkenden - Leistungshalbleitern der H-Brücke vorzusehen.

Die in Serie geschalteten AC-Batterien des Batteriemoduls können durch entsprechende Ansteuerung der Leistungshalbleiterbausteine der jeweiligen H-Brücke einen von der jeweiligen DC-Batterie kommenden Gleichstrom an dem jeweiligen H-Brücken-Eingang und - Ausgang als beliebig geformten Strom ausgeben, insbesondere als Wechselstrom oder als Gleichstrom wählbarer Flussrichtung. Genauso kann durch entsprechende Ansteuerung der Leistungshalbleiterbausteine der jeweiligen H-Brücke ein beliebiger zwischen dem jeweiligen H-Brücken-Eingang und -Ausgang fließender Strom in einen Gleichstrom zum Laden der jeweiligen DC-Batterie gleichgerichtet und/oder umgepolt werden.

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Fig. 1 eine schematische Darstellung einer H-Brücke nach dem Stand der Technik;
Fig. 2 eine schematische Darstellung eines erfindungsgemäßen Batteriemoduls mit Schaltzuständen im Serienbetrieb im Vergleich zu einen Batteriemodul nach dem Stand der Technik;
Fig. 3 eine schematische Darstellung eines erfindungsgemäßen Batteriemoduls mit Schaltzuständen im Bypass-Betrieb im Vergleich zu einen Batteriemodul nach dem Stand der Technik;
Fig. 4 eine schematische Darstellung einer Kontaktierung zwischen Batteriezelle und Leiterplatte mittels Feder; und
Fig. 5 eine vereinfachte Darstellung einer Leiterplatte eines erfindungsgemäßen Batteriemoduls.

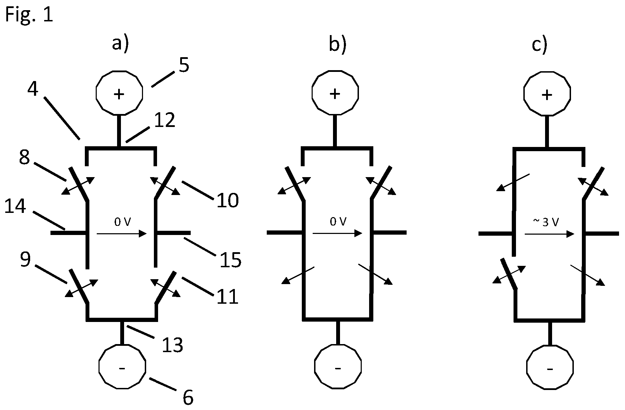

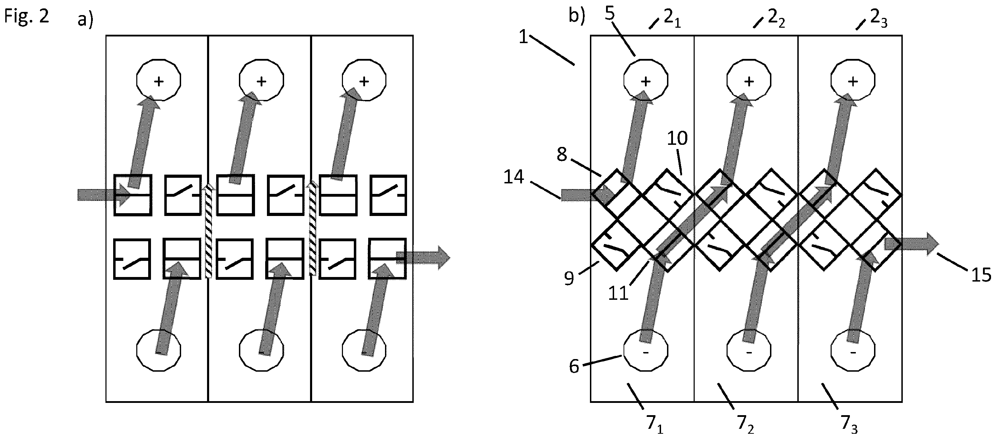

Fig. 1 a) zeigt eine schematische Darstellung nach Art eines Schaltplanes einer H-Brücke mit Schaltern 8, 9, 10, 11, wobei sich alle Schalter in einer geöffneten Position befinden. Ein erster DC-Batterie-Anschluss 5, hier der Pluspol einer sich beispielweise unter der H-Brücke befindlichen DC-Batterie 3 (nicht gezeigt) ist mit einem ersten H-Brücken-Anschluss 12 verbunden. Ähnlich ist ein zweiter DC-Batterie-Anschluss 6, hier der Minuspol, mit dem zweiten H-Brücken-Anschluss 13 verbunden. Zwischen den beiden H-Brücken-Anschlüssen 12, 13 sind zwei Reihenschaltungen aus je zwei Schaltern angeordnet: die Reihenschaltung der Schalter 8 und 9 und die Reihenschaltung der Schalter 10 und 11. Zwischen den beiden Schaltern 8 und 9 ist der H-Brücken-Eingang 14, zwischen den beiden Schaltern 10 und 11 ist der H-Brücken-Ausgang 15 angeordnet. Wird beispielsweise ein Verbraucher (nicht gezeigt) an den H-Brücken-Eingang 14 und den H-Brücken-Ausgang 15 angeschlossen, kann durch die geöffneten Schalter kein Stromfluss stattfinden und damit auch keine Energieentnahme aus der Batterie. Die H-Brücke kann mit weiteren H-Brücken - mit jeweils angeschlossenen DC-Batterien - gekoppelt werden, indem der H-Brücken-Ausgang 15 mit dem H-Brücken-Eingang 14 der nächsten H-Brücken, hier beispielsweise der H-Brücke von Fig. 1b), verbunden werden (siehe auch Fig. 2). In Fig. 1 b) und c) wurden die Bezeichner der Übersichtlichkeit halber weggelassen, sie sollen entsprechend/analog verstanden werden.

In Fig. 1 b) sind die Schalter 8 und 10 geöffnet, während Schalter 9 und 11 geschlossen sind, dadurch kann ein Stromfluss vom H-Brücken-Eingang 14 zum H-Brücken-Ausgang 15 an der zugehörigen DC-Batterie vorbei geleitet werden, dies wird auch oft Bypass-Betrieb genannt.

In Fig. 1 c) sind die Schalter 9 und 10 geöffnet, während Schalter 8 und 11 geschlossen sind, hierdurch liegt die zu den DC-Batterie-Anschlüssen 5 und 6 gehörige DC-Batterie im Stromfluss vom H-Brücken-Eingang 14 zum H-Brücken-Ausgang 15. Anders ausgedrückt, addiert sich einer am H-Brücken-Eingang 14 und H-Brücken-Ausgang 15 anliegenden Spannung die DC-Batteriespannung hinzu. Durch eine umgekehrte Schalterzustandskonfiguration (nicht gezeigt), also Schalter 8 und 11 geöffnet, während die Schalter 9 und 10 geschlossen sind, lässt sich die Polarität der einer Reihenschaltung hinzugefügten Spannung umkehren.

Fig. 2 verdeutlicht im Vergleich die Stromflüsse zwischen einer Anordnung der Schalter nach dem Stand der Technik in a) und bei Anordnung in einem erfindungsgemäßen Batteriemodul in b) im Serienbetrieb. In Fig. 2 b) ist ein erfindungsgemäßes Batteriemodul 1 schematisch dargestellt. Hier werden beispielhaft drei Leiterplatten 7₁, 7₂, 7₃ von AC-Batterien 2₁, 2₂, 2₃ in Draufsicht dargestellt, die zugehörigen DC-Batterien sind unter den Leiterplatten angeordnet (nicht dargestellt). In der Praxis werden erfindungsgemäße Batteriemodule meist mehr als drei AC-Batterien enthalten. Die Leiterplatten 7₁, 7₂, 7₃ können separate Leiterplatten sein, die gegebenenfalls auch mit einem Abstand nebeneinander angeordnet sind oder es kann sich um eine gemeinsame Leiterplatte handeln, die Abschnitte enthält, die den jeweiligen DC-Batterien zugeordnet sind.

Die Verbindungen der vier Leistungshalbleiterbausteine 8, 9, 10, 11 sind der Übersichtlichkeit halber nicht gezeigt, dafür sind die Stromflüsse beziehungsweise die Leitfähigkeit der Verbindungen mittels Pfeilen dargestellt. Die Bezeichner der Leistungshalbleiterbausteine 8, 9, 10, 11 sind nur an AC-Batterie 2₁ eingetragen, die Bezeichner sollen für die anderen AC-Batterien 2₂, 2₃ sinngemäß gelten. Die Schalter 8 und 11 sind geschlossen, die Schalter 9 und 10 geöffnet, das bedeutet, es ist der Serienbetrieb dargestellt (siehe auch Fig. 1c). Das erfindungsgemäße Batteriemodul 1 wird an einem Eingang 14 der AC-Batterie 2₁ und an einem Ausgang 15 der AC-Batterie 2₃ an eine Stromversorgung, weitere AC-Batterien oder einen Verbraucher (nicht gezeigt) angeschlossen.

In Fig. 2 a) wird eine Anordnung der Schalter nach dem Stand der Technik gezeigt. Die Schalter sind parallel oder senkrecht zu den Kanten der Leiterplatte ausgerichtet, die Schaltzustände der Schalter sind identisch zu Fig. 2 b). Mit breiten Pfeilen sind Verbindungen hoher Leitfähigkeit dargestellt, hier ist auf der Leiterplatte genug Platz, um ausreichend große Kupferflächen anzuordnen. Um die Größe des gesamten Batteriemoduls zu minimieren, sollen die DC-Batterien meist dicht aneinander gepackt werden. In diesem Fall wird die maximale Abmessung der Leiterplatte durch die Größe der Oberseite zugehörigen DC-Batterie bestimmt. Dabei kann es vor allem bei dem Übergang bzw. der Verbindung von einem AC-Modul zum nächsten problematisch eng werden. Diese Verbindung ist in Fig. 2 a) mittels eines schmalen, schraffierten Pfeiles dargestellt. Hier ist zu wenig Platz für ausreichend große Kupferflächen, das heißt es resultiert eine geringe Leitfähigkeit bzw. eine Verbindung mit höherem Widerstand. Dies bewirkt insgesamt eine schlechtere Effizienz des Batteriemoduls.

Bei einem erfindungsgemäßen Batteriemodul 1 wie in Fig. 2 b) dargestellt, werden die vier Leistungshalbleiterbausteine in einer X-förmigen Konfiguration auf der Leiterplatte angeordnet, das heißt, sie werden in einem Winkel von etwa 45° zu den Kanten der Leiterplatte ausgerichtet. Hierdurch kann auch die Verbindung von einem AC-Modul zum nächsten mit ausreichend großen Kupferflächen ausgestattet werden, was in einer verbesserten Leitfähigkeit dieser Verbindung und insgesamt in einer verbesserten Effizienz des erfindungsgemäßen Batteriemoduls resultiert.

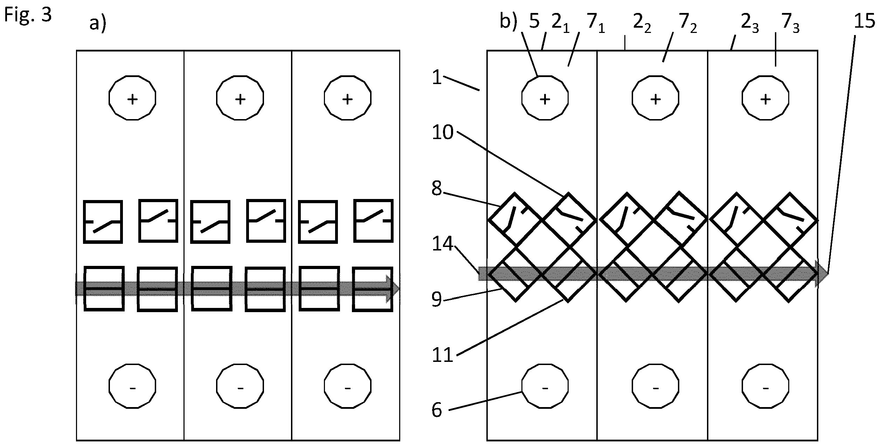

Fig. 3 a) und b) sollen die Leifähigkeit der Strompfade in Bypass-Betrieb veranschaulichen. Da bei einer Multi-Level-Ansteuerung die DC-Batterien sich im Mittel ebenso oft im Strompfad befinden, als auch davon ausgenommen sind, also sich im Bypass-Betrieb befinden, ist auch dieser Strompfad in die Überlegungen zur Gesamteffizienz des erfindungsgemäßen Batteriemoduls einzubeziehen. Der Vergleich von 3a) zu 3b) zeigt, dass die Leitfähigkeit im Bypass-Betrieb zwischen der Anordnung nach dem Stand der Technik und der bei einem erfindungsgemäßen Batteriemodul ähnlich ist, so dass in der Gesamtbilanz das erfindungsgemäße Batteriemodul eine verbesserte Leifähigkeit aufweist.

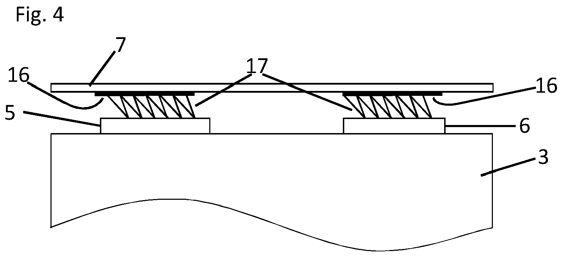

Fig. 4 zeigt einen Teil einer DC-Batterie 3 mit auf der Oberseite angeordneten DC-Batterie-Anschlüssen 5, 6. Auf der Unterseite der Leiterplatte 7 sind leitfähige Anschlussbereiche 16 angeordnet. Mit Federn 17 können die DC-Batterie-Anschlüssen 5, 6 mit den Anschlussbereichen 16 elektrisch verbunden werden. Die Federn können geneigte Windungen haben, wie bei sogenannten "canted coil springs".

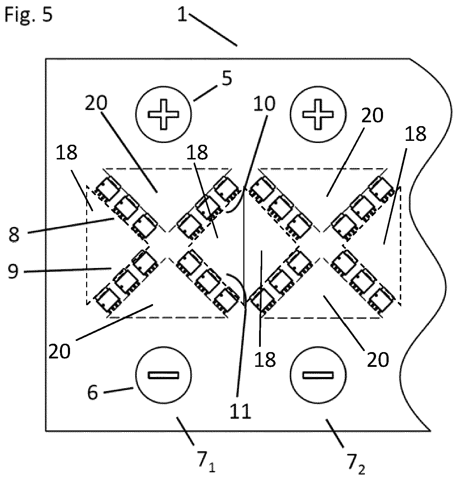

Fig. 5 zeigt eine vereinfachte Darstellung einer Leiterplatte eines erfindungsgemäßen Batteriemoduls 1, wobei zwei H-Brücken für zwei unterhalb der Leiterplattenabschnitten 7₁, 7₂ angeordneten DC-Batterien (nicht gezeigt) dargestellt sind. Im gezeigten Beispiel soll eine durchgehende Leiterplatte die zugehörigen Elektronikmodule aufweisen, wobei die Breite der Leiterplattenabschnitte 7₁, 7₂ an die Breite der DC-Batterien angepasst ist. Die Bezeichner sind beispielhaft für den Leiterplattenabschnitt 7₁ eingetragen und sollen sinngemäß auch für 7₂ und gegebenenfalls weitere sich anschließende Leiterplattenabschnitte gelten. Die in diesem Beispiel gezeigte H-Brücke weist vier Leistungshalbleiterbausteine 8, 9, 10, 11 auf, die jeweils aus drei parallel geschalteten einzelnen Leistungshalbleitern bestehen. Der Figur kann die besonders vorteilhafte Anordnung der Leistungshalbleiterbausteine 8, 9, 10, 11 in X-förmiger Konfiguration im Falle der Parallelschaltung mehrerer Leistungshalbleitern pro Leistungshalbleiterbaustein entnommen werden - insbesondere in Zusammenschau mit den in den Figuren 2b) und 3b) gezeigten Stromflüssen.

Mit gestrichelter Umrandung sind Kontaktierungsflächen 20 gezeigt, die sich in der Lage der Leistungshalbleiterbausteine befinden können, die aber auch in Zwischenlagen einer mehrlagig aufgebauten Leiterplatte oder auf der Unterseite der Leiterplatte angeordnet sein können. Kontaktflächen der Leistungshalbleitergehäuse, beziehungsweise die Pins der Halbleiterchips, kontaktieren die Kontaktierungsflächen 20, welche je nach Geometrie der Oberseite der DC-Batterie und Größe der Kontaktierungsflächen 20 die DC-Batterie-Anschlüsse 5, 6 direkt kontaktieren oder durch eine weitere elektrisch leitende Fläche auf oder in der Leiterplatte oder mittels einer Kabel- oder anderen Verbindung mit den DC-Batterie-Anschlüsse 5, 6 elektrisch leitend verbunden werden kann (nicht gezeigt). Weiterhin sind mit gestrichelter Umrandung Kontaktierungsflächen 18 gezeigt, die sich ebenfalls in der Lage der Leistungshalbleiterbausteine befinden, aber auch in Zwischenlagen einer mehrlagig aufgebauten Leiterplatte oder auf der Unterseite der Leiterplatte angeordnet sein können. Kontaktflächen der Leistungshalbleitergehäuse, beziehungsweise die Pins der Halbleiterchips, kontaktieren die Kontaktierungsflächen 18, welche je nach Geometrie der Oberseite der DC-Batterie und Größe der Kontaktierungsflächen 18 die Kontaktierungsflächen 18 benachbarter AC-Batterien (2₁, 2₂, ... 2ₙ) direkt kontaktieren oder durch eine weitere elektrisch leitende Fläche auf oder in der Leiterplatte oder mittels einer Kabel- oder anderen Verbindung mit den Kontaktierungsflächen 18 benachbarter AC-Batterien (2₁, 2₂, ... 2ₙ) elektrisch leitend verbunden werden kann (nicht gezeigt). Durch die X-förmigen Anordnung der Leistungshalbleiterbausteinen 8, 9, 10, 11 können dreieckige Kontaktierungsflächen 20 aufgebracht werden, die durch ihre größere Ausdehnung in Vergleich zu den üblichen linearen, länglichen Leiterbahnstrukturen eine bessere Leitfähigkeit aufweisen und zu einer besseren Gesamteffizienz des erfindungsgemäßen Batteriemoduls beitragen.

## Patentansprüche

1. Elektronikmodul (4) zum in Serie Schalten einer Vielzahl von AC-Batterien (2₁, 2₂, ... 2ₙ) zu einem Batteriemodul (1), wobei jede aus der Vielzahl von in Serie geschalteten AC-Batterien (2₁, 2₂, ... 2ₙ) eine DC-Batterie (3) und ein zugehöriges Elektronikmodul (4) aufweist und wobei die DC-Batterie einen ersten DC-Batterie-Anschluss (5) und einen zweiten DC-Batterie-Anschluss (6) aufweist,
- wobei das Elektronikmodul (4) eine Leiterplatte (7) mit einer H-Brücke aus vier Leistungshalbleiterbausteinen (8, 9, 10, 11) aufweist,
- wobei die H-Brücke einen ersten H-Brücken-Anschluss (12) und einen zweiten H-Brücken-Anschluss (13) sowie einen H-Brücken-Eingang (14) und einen H-Brücken-Ausgang (15) aufweist, wobei der erste DC-Batterie-Anschluss (5) mit dem ersten H-Brücken-Anschluss (12) und der zweiten DC-Batterie-Anschluss (6) mit dem zweiten H-Brücken-Anschluss (13) über Anschlussbereiche (16) der Leiterplatte (7) elektrisch leitend verbindbar sind und wobei die AC-Batterien (2₁, 2₂, ... 2ₙ) durch eine Verbindung des H-Brücken-Ausgangs (15) einer AC-Batterie mit dem H-Brücken-Eingang (14) einer nächsten AC-Batterie in Serie schaltbar sind,
**dadurch gekennzeichnet, dass** die vier Leistungshalbleiterbausteine in einer X-förmigen Konfiguration auf der Leiterplatte (7) angeordnet sind, wobei die vier Leistungshalbleiterbausteine (8, 9, 10, 11) in einem Winkelbereich zwischen 20° und 70° zu Kanten der Leiterplatte (7) ausgerichtet sind, und wobei zwischen den Leistungshalbleiterbausteinen (8, 9, 10, 11) auf der Leiterplatte (7) dreieckige Kontaktierungsflächen (18, 20) angeordnet sind.

2. Elektronikmodul (4) nach Anspruch 1, wobei sich die dreieckige Form aus der Anordnung der Kontaktierungsflächen (18, 20) zwischen Schenkeln der X-förmigen Konfiguration und einer Ausfüllung eines Raumes zwischen diesen Schenkeln ergibt.

3. Elektronikmodul (4) nach Anspruch 1 oder 2, wobei die vier Leistungshalbleiterbausteine (8, 9, 10, 11) in einem Winkel von 45° zu den Kanten der Leiterplatte (7) ausgerichtet sind.

4. Elektronikmodul (4) nach einem der Ansprüche 1 bis 3, wobei zwei dreieckige Kontaktierungsflächen (20) der dreieckigen Kontaktierungsflächen (18, 20) auf der Leiterplatte (7) zwischen den Leistungshalbleiterbausteinen (8, 11) und dem ersten H-Brücken-Anschluss (12) und zwischen den Leistungshalbleiterbausteinen (9, 11) und dem zweiten H-Brücken-Anschluss (13) angeordnet sind.

5. Elektronikmodul (4) nach Anspruch 4, wobei die zwei dreieckigen Kontaktierungsflächen (20) einstückig mit Anschlussbereichen (16) der Leiterplatte (7) ausgebildet sind, über die der erste DC-Batterie-Anschluss (5) mit dem ersten H-Brücken-Anschluss (12) und der zweiten DC-Batterie-Anschluss (6) mit dem zweiten H-Brücken-Anschluss (13) elektrisch leitend verbindbar ist.

6. Elektronikmodul (4) nach einem der Ansprüche 1 bis 5, wobei jeweils der erste DC-Batterie-Anschluss (5) mit dem ersten H-Brücken-Anschluss (12) und der zweiten DC-Batterie-Anschluss (6) mit dem zweiten H-Brücken-Anschluss (13) mittels einer Feder (17) über die Anschlussbereiche (16) der Leiterplatte (7) elektrisch leitend verbindbar ist.

7. Elektronikmodul (4) nach Anspruch 6, wobei die Feder (17) als Toroidfeder oder als längliche Spiralfeder ausgestaltet ist, die jeweils zwischen dem erstem DC-Batterie-Anschluss (5) und dem zweitem DC-Batterie-Anschluss (6) und den Anschlussbereichen (16) der Leiterplatte (7) klemmend befestigbar ist.

8. Elektronikmodul (4) nach einem der Ansprüche 1 bis 7, wobei zwei dreieckige Kontaktierungsflächen (18) der dreieckigen Kontaktierungsflächen (18, 20) auf der Leiterplatte (7) zwischen den Leistungshalbleiterbausteinen (8, 9) und dem H-Brücken-Eingang (14) und zwischen den Leistungshalbleiterbausteinen (10, 11) und dem H-Brücken-Ausgang (15) angeordnet sind.

9. Elektronikmodul (4) nach einem der Ansprüche 1 bis 8, wobei Abmaße der Leiterplatte (7) mit dem Elektronikmodul (4) abgestimmt sind auf Abmaße der Oberseite der zugehörigen DC-Batterie (3).

10. Elektronikmodul (4) nach einem der Ansprüche 1 bis 9, wobei die vier Leistungshalbleiterbausteine (8, 9, 10, 11) jeweils als Parallelschaltung mehrerer Leistungshalbleiter mit separaten Gehäusen ausgebildet sind.

11. Batteriemodul (1) mit
einer Vielzahl von in Serie geschalteten AC-Batterien (2₁, 2₂, ... 2ₙ),
wobei jede aus der Vielzahl von in Serie geschalteten AC-Batterien (2₁, 2₂, ... 2ₙ) eine DC-Batterie (3) und ein zugehöriges Elektronikmodul (4) nach einem der vorhergehenden Ansprüche aufweist,
wobei die DC-Batterie einen ersten DC-Batterie-Anschluss (5) und einen zweiten DC-Batterie-Anschluss (6) aufweist,
wobei der erste DC-Batterie-Anschluss (5) mit dem ersten H-Brücken-Anschluss (12) und der zweiten DC-Batterie-Anschluss (6) mit dem zweiten H-Brücken-Anschluss (13) über Anschlussbereiche (16) der Leiterplatte (7) elektrisch leitend verbunden sind und
wobei die AC-Batterien durch eine Verbindung des H-Brücken-Ausgangs (15) einer AC-Batterie mit dem H-Brücken-Eingang (14) einer nächsten AC-Batterie in Serie geschaltet sind.

12. Batteriemodul (1) nach Anspruch 11 soweit direkt oder indirekt rückbezogen auf Anspruch 5, wobei über die einstückig mit den Anschlussbereichen (16) der Leiterplatte (7) ausgebildeten zwei dreieckigen Kontaktierungsflächen (20) der erste DC-Batterie-Anschluss (5) mit dem ersten H-Brücken-Anschluss (12) und der zweiten DC-Batterie-Anschluss (6) mit dem zweiten H-Brücken-Anschluss (13) elektrisch leitend verbunden ist.

13. Batteriemodul (1) nach Anspruch 11 oder 12 soweit direkt oder indirekt rückbezogen auf Anspruch 6, wobei jeweils der erste DC-Batterie-Anschluss (5) mit dem ersten H-Brücken-Anschluss (12) und der zweiten DC-Batterie-Anschluss (6) mit dem zweiten H-Brücken-Anschluss (13) mittels einer Feder (17) über die Anschlussbereiche (16) der Leiterplatte (7) elektrisch leitend verbunden ist.

14. Batteriemodul (1) nach Anspruch 13, wobei die Feder (17) als Toroidfeder ausgestaltet ist, die jeweils zwischen dem erstem DC-Batterie-Anschluss (5) und dem zweitem DC-Batterie-Anschluss (6) und den Anschlussbereichen (16) der Leiterplatte (7) klemmend befestigt ist.

15. Batteriemodul (1) nach Anspruch 13, wobei die Feder (17) als längliche Spiralfeder ausgestaltet ist, die jeweils zwischen dem erstem DC-Batterie-Anschluss (5) und dem zweitem DC-Batterie-Anschluss (6) und den Anschlussbereichen (16) der Leiterplatte (7) klemmend befestigt ist.

## Claims

1. Electronic module (4) for connecting a plurality of AC batteries (2₁, 2₂, ... 2ₙ) in series to form a battery module (1), wherein each of the plurality of series-connected AC batteries (2₁, 2₂, ... 2ₙ) has a DC battery (3) and an associated electronic module (4), and wherein the DC battery has a first DC battery terminal (5) and a second DC battery terminal (6),
- wherein the electronic module (4) has a printed circuit board (7) having an H-bridge consisting of four power semiconductor components (8, 9, 10, 11),
- wherein the H-bridge has a first H-bridge terminal (12) and a second H-bridge terminal (13) as well as an H-bridge input (14) and an H-bridge output (15), wherein the first DC battery terminal (5) can be electrically conductively connected to the first H-bridge terminal (12) and the second DC battery terminal (6) can be electrically conductively connected to the second H-bridge terminal (13) via connection regions (16) of the printed circuit board (7), and wherein the AC batteries (2₁, 2₂, ... 2ₙ) can be connected in series by connecting the H-bridge output (15) of one AC battery to the H-bridge input (14) of a next AC battery,
**characterized in that** the four power semiconductor components are arranged in an X-shaped configuration on the printed circuit board (7), wherein the four power semiconductor components (8, 9, 10, 11) are oriented within an angular range between 20° and 70° relative to edges of the printed circuit board (7), and wherein triangular contacting surfaces (18, 20) are arranged between the power semiconductor components (8, 9, 10, 11) on the printed circuit board (7).

2. Electronic module (4) according to claim 1, wherein the triangular form results from the arrangement of the contacting surfaces (18, 20) between legs of the X-shaped configuration and a filling of a space between these legs.

3. Electronic module (4) according to claim 1 or 2, wherein the four power semiconductor components (8, 9, 10, 11) are oriented at an angle of 45° relative to the edges of the printed circuit board (7).

4. Electronic module (4) according to any of the claims 1 to 3, wherein two triangular contacting surfaces (20) of the triangular contacting surfaces (18, 20) are arranged on the printed circuit board (7) between the power semiconductor components (8, 11) and the first H-bridge terminal (12) and between the power semiconductor components (9, 11) and the second H-bridge terminal (13).

5. Electronic module (4) according to claim 4, wherein the two triangular contacting surfaces (20) are formed in one piece with connection regions (16) of the printed circuit board (7), via which the first DC battery terminal (5) can be electrically conductively connected to the first H-bridge terminal (12) and the second DC battery terminal (6) can be electrically conductively connected to the second H-bridge terminal (13).

6. Electronic module (4) according to any of the claims 1 to 5, wherein the first DC battery terminal (5) can be electrically conductively connected to the first H-bridge terminal (12) and the second DC battery terminal (6) can be electrically conductively connected to the second H-bridge terminal (13), respectively, by means of a spring (17) via the connection regions (16) of the printed circuit board (7).

7. Electronic module (4) according to claim 6, wherein the spring (17) is configured as a toroidal spring or as an elongate helical spring, each of which can be clampingly fastened between the first DC battery terminal (5) and the second DC battery terminal (6) and the connection regions (16) of the printed circuit board (7).

8. Electronic module (4) according to any of the claims 1 to 7, wherein two triangular contacting surfaces (18) of the triangular contacting surfaces (18, 20) are arranged on the printed circuit board (7) between the power semiconductor components (8, 9) and the H-bridge input (14) and between the power semiconductor components (10, 11) and the H-bridge output (15).

9. Electronic module (4) according to any of the claims 1 to 8, wherein dimensions of the printed circuit board (7) having the electronic module (4) are matched to dimensions of the upper side of the associated DC battery (3).

10. Electronic module (4) according to any of the claims 1 to 9, wherein the four power semiconductor components (8, 9, 10, 11) are each formed as a parallel connection of a plurality of power semiconductors having separate housings.

11. Battery module (1) comprising
a plurality of series-connected AC batteries (2₁, 2₂, ... 2ₙ),
wherein each of the plurality of series-connected AC batteries (2₁, 2₂, ... 2ₙ) has a DC battery (3) and an associated electronic module (4) according to any of the preceding claims,
wherein the DC battery has a first DC battery terminal (5) and a second DC battery terminal (6), wherein the first DC battery terminal (5) is electrically conductively connected to the first H-bridge terminal (12) and the second DC battery terminal (6) is electrically conductively connected to the second H-bridge terminal (13) via connection regions (16) of the printed circuit board (7), and wherein the AC batteries are connected in series by connecting the H-bridge output (15) of one AC battery to the H-bridge input (14) of a next AC battery.

12. Battery module (1) according to claim 11 insofar as directly or indirectly dependent on claim 5, wherein, via the two triangular contacting surfaces (20) formed in one piece with the connection regions (16) of the printed circuit board (7), the first DC battery terminal (5) is electrically conductively connected to the first H-bridge terminal (12) and the second DC battery terminal (6) is electrically conductively connected to the second H-bridge terminal (13).

13. Battery module (1) according to claim 11 or 12 insofar as directly or indirectly dependent on claim 6, wherein the first DC battery terminal (5) is electrically conductively connected to the first H-bridge terminal (12) and the second DC battery terminal (6) is electrically conductively connected to the second H-bridge terminal (13), respectively, by means of a spring (17) via the connection regions (16) of the printed circuit board (7).

14. Battery module (1) according to claim 13, wherein the spring (17) is configured as a toroidal spring which is clampingly fastened between the first DC battery terminal (5) and the second DC battery terminal (6) and the connection regions (16) of the printed circuit board (7).

15. Battery module (1) according to claim 13, wherein the spring (17) is configured as an elongate helical spring which is clampingly fastened between the first DC battery terminal (5) and the second DC battery terminal (6) and the connection regions (16) of the printed circuit board (7).

## Revendications

1. Module électronique (4) pour connecter en série une pluralité de batteries CA (2₁, 2₂, ..., 2ₙ) en un module de batterie (1), chaque batterie CA (2₁, 2₂, ..., 2ₙ) connectée en série de ladite pluralité comprenant une batterie CC (3) et un module électronique (4) associé, la batterie CC comportant un premier borne de batterie CC (5) et un deuxième borne de batterie CC (6),
- le module électronique (4) comprenant une carte de circuit imprimé (7) avec un pont en H constitué de quatre composants semi-conducteurs de puissance (8, 9, 10, 11),
- le pont en H comportant un premier borne de pont en H (12) et un deuxième borne de pont en H (13) ainsi qu'une entrée de pont en H (14) et une sortie de pont en H (15), le premier borne de batterie CC (5) étant pouvant être connecté électriquement au premier borne de pont en H (12) et le deuxième borne de batterie CC (6) étant pouvant être connecté électriquement au deuxième borne de pont en H (13) via des zones de connexion (16) de la carte de circuit imprimé (7), et les batteries CA (2₁, 2₂, ..., 2ₙ) étant connectables en série par une connexion de la sortie de pont en H (15) d'une batterie CA avec l'entrée de pont en H (14) d'une batterie CA suivante, **caractérisé en ce que** les quatre composants semi-conducteurs de puissance sont disposés dans une configuration en X sur la carte de circuit imprimé (7), les quatre composants semi-conducteurs de puissance (8, 9, 10, 11) étant orientés dans une plage angulaire entre 20° et 70° par rapport aux bords de la carte de circuit imprimé (7), et des surfaces de contact triangulaires (18, 20) étant disposées entre les composants semi-conducteurs de puissance (8, 9, 10, 11) sur la carte de circuit imprimé (7).

2. Module électronique (4) selon la revendication 1, la forme triangulaire résultant de la disposition des surfaces de contact (18, 20) entre les branches de la configuration en X et d'un remplissage d'un espace entre ces branches.

3. Module électronique (4) selon la revendication 1 ou 2, les quatre composants semi-conducteurs de puissance (8, 9, 10, 11) étant orientés à un angle de 45° par rapport aux bords de la carte de circuit imprimé (7).

4. Module électronique (4) selon l'une des revendications 1 à 3, deux surfaces de contact triangulaires (20) parmi les surfaces de contact triangulaires (18, 20) étant disposées sur la carte de circuit imprimé (7) entre les composants semi-conducteurs de puissance (8, 11) et le premier borne de pont en H (12) et entre les composants semi-conducteurs de puissance (9, 11) et le deuxième borne de pont en H (13).

5. Module électronique (4) selon la revendication 4, les deux surfaces de contact triangulaires (20) étant d'une seule pièce avec les zones de connexion (16) de la carte de circuit imprimé (7), par lesquelles le premier borne de batterie CC (5) est pouvant être connecté électriquement au premier borne de pont en H (12) et le deuxième borne de batterie CC (6) est pouvant être connecté électriquement au deuxième borne de pont en H (13).

6. Module électronique (4) selon l'une des revendications 1 à 5, le premier borne de batterie CC (5) étant pouvant être connecté électriquement au premier borne de pont en H (12) et le deuxième borne de batterie CC (6) étant pouvant être connecté électriquement au deuxième borne de pont en H (13) respectivement au moyen d'un ressort (17) via les zones de connexion (16) de la carte de circuit imprimé (7).

7. Module électronique (4) selon la revendication 6, le ressort (17) étant configuré comme ressort toroïdal ou comme ressort spiral allongé, chacun étant pouvant être fixé par serrage entre le premier borne de batterie CC (5) et le deuxième borne de batterie CC (6) et les zones de connexion (16) de la carte de circuit imprimé (7).

8. Module électronique (4) selon l'une des revendications 1 à 7, deux surfaces de contact triangulaires (18) parmi les surfaces de contact triangulaires (18, 20) étant disposées sur la carte de circuit imprimé (7) entre les composants semi-conducteurs de puissance (8, 9) et l'entrée de pont en H (14) et entre les composants semi-conducteurs de puissance (10, 11) et la sortie de pont en H (15).

9. Module électronique (4) selon l'une des revendications 1 à 8, les dimensions de la carte de circuit imprimé (7) avec le module électronique (4) étant adapté à les dimensions de la face supérieure de la batterie CC (3) associée.

10. Module électronique (4) selon l'une des revendications 1 à 9, les quatre composants semi-conducteurs de puissance (8, 9, 10, 11) étant chacun configurés comme connexion en parallèle de plusieurs semi-conducteurs de puissance avec des boîtiers séparés.

11. Module de batterie (1) comprenant
une pluralité de batteries CA (2₁, 2₂, ... 2ₙ) connectées en série,
chaque batterie CA (2₁, 2₂, ... 2ₙ) connectée en série de ladite pluralité comprenant une batterie CC (3) et un module électronique (4) selon l'une des revendications précédentes,
la batterie CC comportant un premier borne de batterie CC (5) et un deuxième borne de batterie CC (6), le premier borne de batterie CC (5) étant connecté au premier borne de pont en H (12) et le deuxième borne de batterie CC (6) étant connecté au deuxième borne de pont en H (13) via des zones de connexion (16) de la carte de circuit imprimé (7) de manière pouvant être connecté électriquement, et
les batteries CA étant connectées en série par une connexion de la sortie de pont en H (15) d'une batterie CA avec l'entrée de pont en H (14) d'une batterie CA suivante.

12. Module de batterie (1) selon la revendication 11, dans la mesure où il se réfère directement ou indirectement à la revendication 5, le premier borne de batterie CC (5) étant connecté au premier borne de pont en H (12) et le deuxième borne de batterie CC (6) étant connecté au deuxième borne de pont en H (13) de manière pouvant être connecté électriquement via les deux surfaces de contact triangulaires (20) d'une seule pièce avec les zones de connexion (16) de la carte de circuit imprimé (7).

13. Module de batterie (1) selon la revendication 11 ou 12, dans la mesure où il se réfère directement ou indirectement à la revendication 6, le premier borne de batterie CC (5) étant connecté au premier borne de pont en H (12) et le deuxième borne de batterie CC (6) étant connecté au deuxième borne de pont en H (13) respectivement au moyen d'un ressort (17) via les zones de connexion (16) de la carte de circuit imprimé (7) de manière pouvant être connecté électriquement.

14. Module de batterie (1) selon la revendication 13, le ressort (17) étant configuré comme ressort toroïdal, chacun étant fixé par serrage entre le premier borne de batterie CC (5) et le deuxième borne de batterie CC (6) et les zones de connexion (16) de la carte de circuit imprimé (7).

15. Module de batterie (1) selon la revendication 13, le ressort (17) étant configuré comme ressort spiral allongé, chacun étant fixé par serrage entre le premier borne de batterie CC (5) et le deuxième borne de batterie CC (6) et les zones de connexion (16) de la carte de circuit imprimé (7).
